# EUROPEAN PATENT APPLICATION

(11) **EP 2 921 660 A1**
(43) Date of publication of application: **23.09.2015**
(21) Application number: 14839737.5
(22) Date of filing: 22.08.2014
(51) Int. Cl.: F01K 23/16, B63J 3/02, F01D 15/12, F01D 25/00, F01D 25/28, F01K 13/00

(54) **COMBINED MOTIVE POWER APPARATUS AND SHIP EQUIPPED WITH SAME**

(30) Priority: 28.08.2013 JP 2013176580
(71) Applicant: Mitsubishi Heavy Industries, Ltd., Tokyo 108-8215 (JP)
(72) Inventor: KANABOSHI, Takayuki, Tokyo 108-8215 (JP)
(74) Representative: Hoffmann Eitle
(86) International application number: PCT/JP2014/072000
(87) International publication number: WO 2015/029898

(57) **Abstract**

A combined power generation unit requires fewer flexible couplings to prevent stress due to thermal expansion of a turbine from being transferred to a clutch device, thus achieving a smaller size, a lower construction cost, and a higher alignment accuracy. In a combined power generation unit (30), at least one of a power turbine (2) and a steam turbine (3), whichever experiences a larger amount of thermal expansion (e.g., the steam turbine (3)), includes a thermal expansion starting point (11) located at one end in an axial direction L and fixed to a top surface of a foundation and a thermal expansion moving point (15) located at another end in the axial direction L and arranged to be movable relative to the top surface of the foundation only in the axial direction L. A relative movement structure (A) is provided that prevents stress due to movement of the thermal expansion moving point (15) from being transferred to a clutch device (7). For example, the relative movement structure (A) is configured such that, whereas the thermal expansion starting point (11) is directed toward the side of the turbine (3) facing the clutch device (7), the thermal expansion moving point (15) is directed toward the side of the turbine (3) facing away from the clutch device (7).

## Description

### {Technical Field}

The present invention relates to combined power units in which the output shaft of a power turbine and the output shaft of a steam turbine are coupled via a clutch device and which are configured to drive, for example, a generator by the rotational output of each turbine, and also to vessels including such combined power units. The clutch device engages and disengages depending on the rotational speed of each turbine and thus allows, for example, the generator to be driven only by the output of the steam turbine or by the total output of the steam turbine and the power turbine.

### {Background Art}

As disclosed in PTL 1, there is a known combined power generation unit in which a power turbine and a steam turbine are arranged on the same shaft and which are configured to drive a generator by the rotational output of each turbine. One of the steam turbine and the power turbine is fixed to a foundation, whereas the other turbine is fixed to the foundation so as to be flexible in the axial direction to absorb elongation in the axial direction due to thermal expansion of the steam turbine and the power turbine.

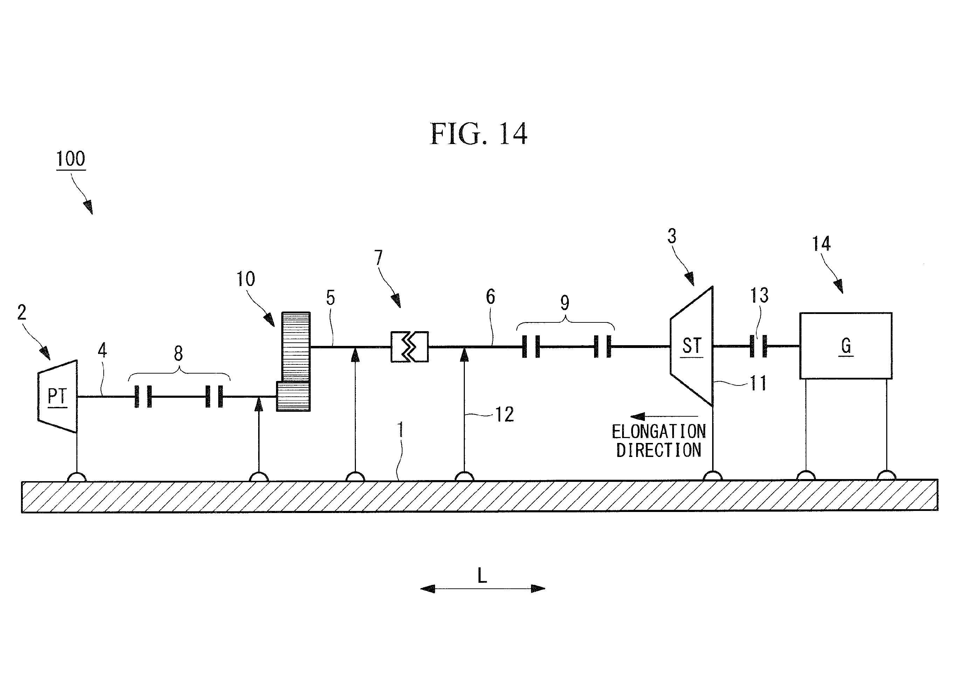

Alternatively, in a conventional combined power generation unit 100 shown in Fig. 14, both a power turbine 2 and a steam turbine 3 are fixed to the top surface of a foundation 1, and output shafts 4 and 5 extending from the power turbine 2 and an output shaft 6 extending from the steam turbine 3 are coupled with a clutch device 7. Flexible couplings 8 and 9 that permit elongation and contraction in the axial direction L are disposed on the output shafts 4 and 6, respectively, to absorb the thermal expansion of the power turbine 2 and the steam turbine 3 in the axial direction L.

The clutch device 7 is typically a self-engaging clutch called a synchro-self-shifting (SSS) clutch, which has low thermal expansion absorption capacity in the axial direction L. Therefore, diaphragm couplings are suitable as the flexible couplings 8 and 9 because of their high thermal expansion absorption capacity. A reduction drive 10 is disposed between the output shafts 4 and 5 extending from the power turbine 2 so that the rotational speed of the power turbine 2 matches the rotational speed of the steam turbine 3.

The steam turbine 3 includes a thermal expansion starting point 11 located at one end of the casing. The thermal expansion starting point 11 may be, for example, a bearing support on the side of the steam turbine 3 facing away from the clutch device 7. The thermal expansion starting point 11 and a bearing support 12 on the side facing the clutch device 7 are fixed to the foundation 1, and the flexible couplings 9 are disposed between the thermal expansion starting point 11 and the bearing support 12. A generator 14 is coupled to the steam turbine 3 via a shaft 13.

Among the supports such as the bearing support 12 in Fig. 14, those having arrowheads at the ends thereof support a load while permitting shaft rotation and movement in the axial direction, whereas those having no arrowhead at the ends thereof support a load without permitting movement in the axial direction. The circles shown on the supports such as the bearing support 12 near the foundation 1 denote the portions thereof that are fixed to the foundation 1.

In the thus-configured combined power generation unit 100, when the rotational speed of the output shaft 4 of the power turbine 2 matches (i.e., is in synchronization with) the rotational speed of the output shaft 6 of the steam turbine 3 via the reduction drive 10, the clutch device 7 engages automatically, and the generator 14 is driven by the rotational output of the power turbine 2 and the steam turbine 3 to generate electricity.

### {Citation List}

### {Patent Literature}

### {PTL 1}

Japanese Unexamined Patent Application, Publication No. HEI-6-257411

### {Summary of Invention}

### {Technical Problem}

In the combined power generation unit in PTL 1, in which one of the steam turbine and the power turbine is fixed so as to be flexible relative to the other turbine in the axial direction to allow for thermal expansion in the axial direction, an error may occur in the alignment of the axial direction of the power turbine, the steam turbine, and the generator.

The conventional combined power generation unit 100 shown in Fig. 14, in which the flexible couplings 8 and 9 are provided in the output shafts 4 and 6, respectively, to absorb thermal expansion in the axial direction L, has a problem in that the output shafts 4 and 6 are long because of the flexible couplings 8 and 9 and thus increase the size of the combined power generation unit 100 and decrease the alignment accuracy.

The mounting of the plurality of flexible couplings 8 and 9 contributes to a cost increase and also increases the total number of components since other components, such as an intermediate connection shaft and a bearing therefor (not shown), are required. Another problem is that the construction cost of such a combined power generation unit is high because of the use of diaphragm couplings, which are expensive, as the flexible couplings 8 and 9.

The flexible couplings 8 and 9 are expensive couplings including a flexible portion and are capable of absorbing thermal expansion. The need for only one flexible coupling not only would allow for a smaller size and a lower cost, but also would provide the advantage of facilitating the procedure of aligning the axes of rotation of the output shafts of the power turbine 2 and the steam turbine 3 during mounting.

In view of the foregoing, the present invention provides a combined power unit that requires fewer flexible couplings to prevent stress due to thermal expansion of a turbine from being transferred to a clutch device, thus achieving a smaller size, a lower construction cost, and a higher alignment accuracy, and also provides a vessel including such a combined power unit.

### {Solution to Problem}

To solve the foregoing problems, a combined power unit according to the present invention employs the following solutions.

A first aspect of the present invention is a combined power unit in which an output shaft of a power turbine and an output shaft of a steam turbine that are mounted on a top surface of a foundation can be coupled via a clutch device. At least one of the power turbine and the steam turbine, whichever experiences a larger amount of thermal expansion, includes a thermal expansion starting point located at one end in an axial direction and fixed to the top surface of the foundation and a thermal expansion moving point located at another end in the axial direction and arranged to be movable relative to the top surface of the foundation in the axial direction, and a relative movement structure is provided that prevents stress due to movement of the thermal expansion moving point from being transferred to the clutch device.

In the above configuration, when at least one of the two turbines, whichever experiences a larger amount of thermal expansion, expands thermally in the axial direction, the thermal expansion starting point of the turbine does not move relative to the foundation; instead, the thermal expansion moving point moves relative to the foundation in the axial direction. During the movement, the relative movement structure prevents stress due to the movement of the thermal expansion moving point from being transferred to the clutch device.

Thus, the combined power unit requires fewer flexible couplings to absorb the thermal expansion of the turbine; therefore, it can be made shorter in the axial direction, thus achieving a smaller size, and can also be constructed at a lower cost.

The relative movement structure may be configured such that, whereas the thermal expansion starting point is located on the side of the turbine facing the clutch device, the thermal expansion moving point is located on the side of the turbine facing away from the clutch device. In this case, the direction in which the axial size of the turbine increases when the turbine expands thermally in the axial direction is the direction away from the clutch device, which allows the combined power unit to absorb the thermal expansion of the turbine with a simple and inexpensive structure without providing flexible couplings to prevent stress due to thermal expansion from being transferred to the clutch device.

In addition, because the combined power unit requires no flexible coupling between the turbine and the clutch device, the shaft length between the turbine and the clutch device can be made shorter, which results in a lower likelihood of misalignment and therefore a higher alignment accuracy.

In the combined power unit according to the first aspect, the thermal expansion moving point may be fixed to a moving base mounted so as to be movable relative to the top surface of the foundation in the axial direction.

In this configuration, when the turbine expands thermally in the axial direction, the thermal expansion moving point of the turbine moves away from the clutch device over the top surface of the foundation in the axial direction together with the moving base, thereby allowing the thermal expansion of the turbine to be smoothly absorbed and preventing stress due to thermal expansion from being transferred to the clutch device.

In the above configuration, the moving base may be movable in the axial direction via a key groove defined between the moving base and the top surface of the foundation and extending in the axial direction and a plurality of keys fitted in the key groove, each key having an axial length that is smaller than an axial size of the moving base and having a center of rotation about which the key is rotatable through an extremely small angle in the key groove, the keys being separated from each other in the axial direction.

In this configuration, when the moving base, the keys, or the key groove expands thermally and deforms slightly due to heat from the turbine, the keys rotate through an extremely small angle in the key groove to absorb the deformation. Thus, a simple structure can be used to achieve a higher alignment accuracy.

In the combined power unit according to the first aspect, the relative movement structure may be configured such that the thermal expansion moving point and the clutch device are mounted on a moving base mounted so as to be movable relative to the top surface of the foundation in the axial direction.

In this configuration, when the turbine expands thermally in the axial direction, both the thermal expansion moving point of the turbine and the clutch device move over the top surface of the foundation in the axial direction while remaining on the moving base. There is therefore no relative movement between the thermal expansion moving point of the turbine and the clutch device.

Thus, the combined power unit requires no flexible coupling between the turbine and the clutch device and hence requires fewer flexible couplings; therefore, it can be made shorter in the axial direction, thus achieving a smaller size, and can also be constructed at a lower cost.

In the combined power unit according to the first aspect, the thermal expansion moving point in the relative movement structure may be coupled to the top surface of the foundation via a flexible support configured to deform in the axial direction while coupling the thermal expansion moving point to the top surface of the foundation to permit movement of the thermal expansion moving point in the axial direction.

In this configuration, when the turbine expands thermally in the axial direction, the flexible support deforms in the axial direction, and accordingly the thermal expansion moving point of the turbine moves away from the clutch device over the top surface of the foundation in the axial direction to absorb the thermal expansion.

Because the flexible support can be formed in an extremely simple form such as a flexible plate-shaped member, the combined power unit can be constructed at a lower cost and has high reliability.

In addition, because the flexible support deforms in the axial direction of the turbine, no error occurs in the alignment of the axial direction of the turbine due to deformation of the flexible support, which results in a higher alignment accuracy.

A second aspect of the present invention is a vessel including one of the above combined power units.

In this vessel, the combined power unit requires no flexible coupling between the turbine and the clutch device because no stress due to thermal expansion of the turbine is transferred to the clutch device.

Thus, the combined power unit according to the present invention can be made shorter in the axial direction and therefore occupies a smaller inboard space. This simplifies the inboard layout, thus improving the design flexibility.

Furthermore, because the combined power unit requires fewer flexible couplings, which are expensive, the combined power unit is less expensive, and accordingly the vessel is less expensive.

### {Advantageous Effects of Invention}

As described above, a combined power unit according to the present invention requires fewer flexible couplings to prevent stress due to thermal expansion of a turbine from being transferred to a clutch device, thus achieving a smaller size, a lower construction cost, and a higher alignment accuracy.

In a vessel including the combined power unit according to the present invention, the combined power unit requires fewer flexible couplings between the turbine and the clutch device because no stress due to thermal expansion of the turbine is transferred to the clutch device; therefore, it can be made shorter in the axial direction, thereby simplifying the inboard layout and improving the design flexibility, and the vessel is also less expensive.

### {Brief Description of Drawings}

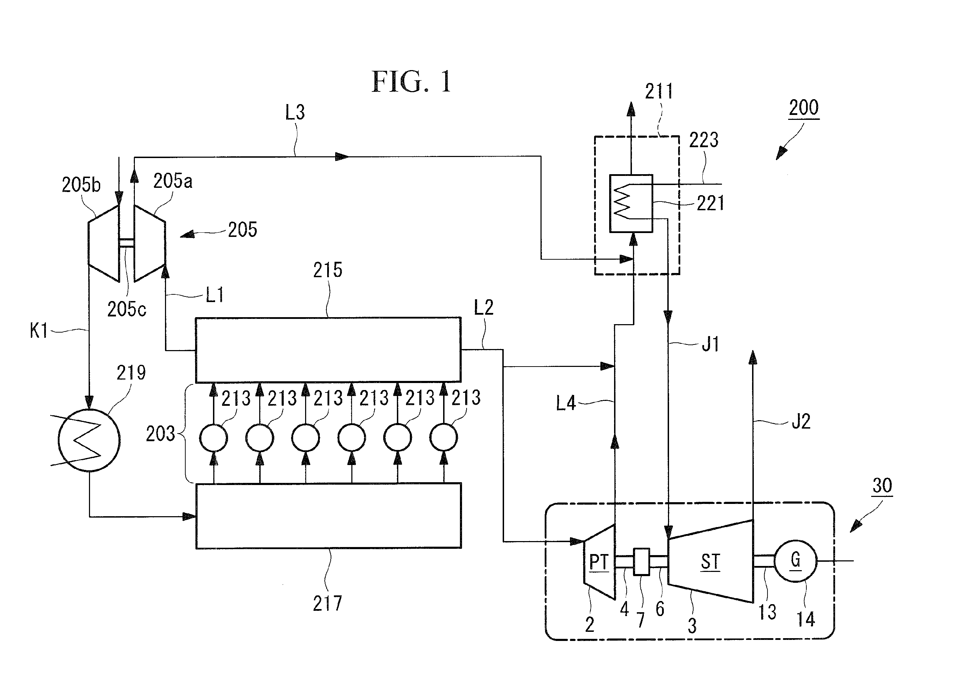

{Fig. 1}
   Fig. 1 is a schematic block diagram of a marine power generation system to which a combined power unit according to the present invention is applied.
{Fig. 2}
   Fig. 2 is a side view of a combined power generation unit according to a first embodiment of the present invention.
{Fig. 3}
   Fig. 3 is a plan view of the combined power generation unit according to the first embodiment of the present invention.
{Fig. 4}
   Fig. 4 is a perspective view illustrating a foundation and a moving base.
{Fig. 5}
   Fig. 5 is a side view of a combined power generation unit according to a second embodiment of the present invention.
{Fig. 6}
   Fig. 6 is a side view illustrating a steam turbine and flexible supports.
{Fig. 7}
   Fig. 7 is a plan view illustrating the steam turbine and the flexible supports.
{Fig. 8}
   Fig. 8 is a side view of a combined power generation unit according to a third embodiment of the present invention.
{Fig. 9}
   Fig. 9 is a side view of a combined power generation unit according to a fourth embodiment of the present invention.
{Fig. 10}
   Fig. 10 is a plan view illustrating a first example of keys and a key groove.
{Fig. 11}
   Fig. 11 is a plan view illustrating a second example of keys and a key groove.
{Fig. 12}
   Fig. 12 is a side view of a combined power generation unit according to a fifth embodiment of the present invention.
{Fig. 13}
   Fig. 13 is a plan view of the combined power generation unit according to the fifth embodiment of the present invention.
{Fig. 14}
   Fig. 14 is a side view of a combined power generation unit in the conventional art.

### {Description of Embodiments}

A plurality of embodiments of combined power units according to the present invention will be described below with reference to the drawings.

### First Embodiment

Fig. 1 is a schematic block diagram of a marine power generation system to which a combined power unit according to the present invention is applied as a power generation unit.

A power generation system 200 includes a diesel engine 203 for vessel propulsion, an exhaust turbocharger 205, a power turbine (gas turbine) 2, a steam turbine 3, and an exhaust gas economizer 211 serving as an exhaust gas heat exchanger. The exhaust turbocharger 205 includes a turbine part 205a, a compressor part 205b, and a rotating shaft 205c coupling the turbine part 205a and the compressor part 205b. The output of the diesel engine 203 is directly or indirectly coupled to a screw propeller via a propeller shaft (not shown).

The exhaust port of each cylinder part 213 of the diesel engine 203 is connected to an exhaust manifold 215 serving as an exhaust-gas collecting pipe, and the exhaust manifold 215 is in turn connected through a first exhaust pipe L1 to the inlet of the turbine part 205a of the exhaust turbocharger 205 and through a second exhaust pipe L2 (bleed passage) to the inlet of the power turbine 2 so that some exhaust gas is bled and supplied to the power turbine 2 before being supplied to the exhaust turbocharger 205.

The supply port of each cylinder part 213 is connected to a supply manifold 217, and the supply manifold 217 is in turn connected through a supply pipe K1 to the compressor part 205b of the exhaust turbocharger 205. An air cooler (intercooler) 219 is provided in the supply pipe K1.

The power turbine 2 is rotationally driven by exhaust gas bled from the exhaust manifold 215 through the second exhaust pipe L2, whereas the steam turbine 3 is rotationally driven by steam generated and supplied from the exhaust gas economizer 211.

The exhaust gas economizer 211 is supplied with exhaust gas discharged from the outlet of the turbine part 205a of the exhaust turbocharger 205 through a third exhaust pipe L3 and with exhaust gas discharged from the outlet of the power turbine 2 through a fourth exhaust pipe L4 to exchange heat between the exhaust gas and water flowing through a feedwater pipe 223 in a heat exchanger part 221 and thereby to generate steam from the water.

The steam generated by the exhaust gas economizer 211 is supplied through a first steam pipe J1 to the steam turbine 3, and the steam that has done work in the steam turbine 3 is discharged through a second steam pipe J2 and is directed to a condenser (steam condenser) (not shown).

The power turbine 2 and the steam turbine 3 are coupled in series and drive a generator 14 via a shaft 13. An output shaft 4 of the power turbine 2 is coupled to an output shaft 6 of the steam turbine 3 via a clutch device 7 (SSS clutch).

The power turbine 2, the steam turbine 3, the clutch device 7, a reduction drive 10, and the generator 14 constitute a combined power generation unit 30 (combined power unit). The combined power generation unit 30 is driven by the exhaust energy of exhaust gas (combustion gas) discharged from the diesel engine 203 for vessel propulsion and can efficiently recover the exhaust energy.

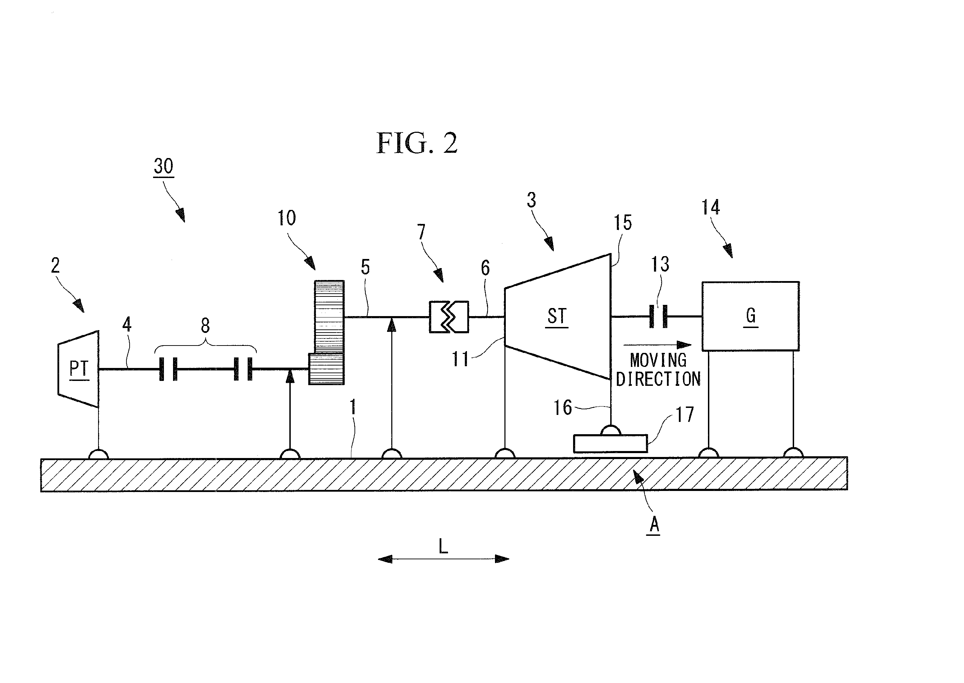

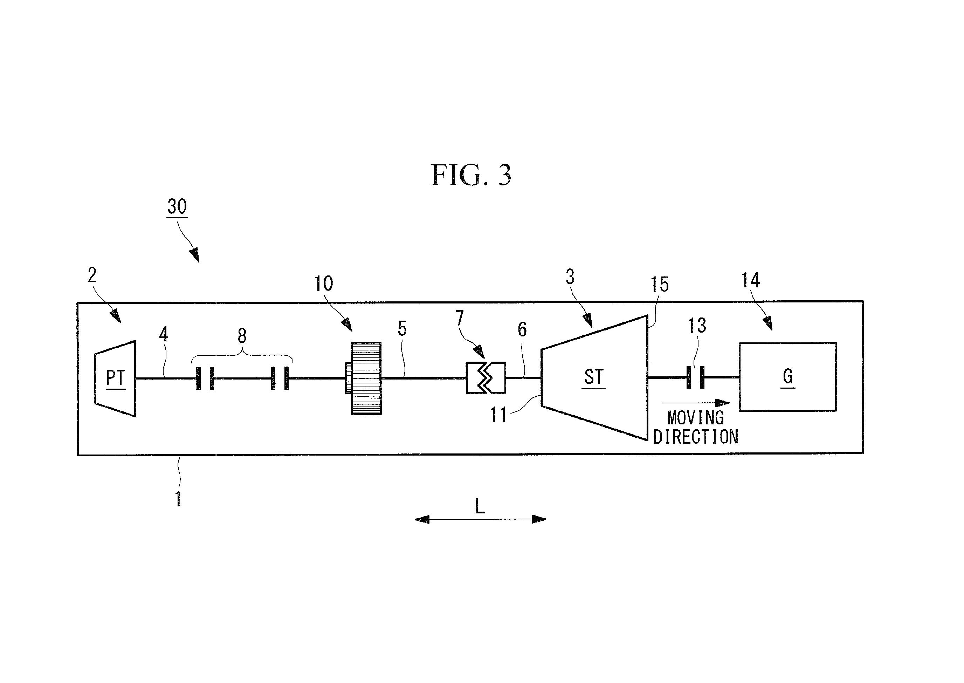

Figs. 2 and 3 are a side view and a plan view, respectively, of the combined power generation unit 30 according to the first embodiment of the present invention. In the combined power generation unit 30, as in the conventional combined power generation unit 100 shown in Fig. 14, the output shafts 4 and 5, to which rotation is transmitted from the power turbine 2 mounted on the top surface of the foundation 1 via the reduction drive 10, and the output shaft 6, which extends from the steam turbine 3 mounted on the top surface of the foundation 1, are coupled with the clutch device 7 to drive the generator 14 by the combined output of the two turbines 2 and 3. A member such as a coupling capable of absorbing elongation and contraction in the axial direction L is provided in the shaft 13 coupling the steam turbine 3 and the generator 14.

Whereas the rotational speed of the power turbine 2 is about 15,000 to about 25,000 rpm, the rotational speed of the steam turbine 3 is about 6,000 to about 12,000 rpm; thus, there is a difference in rotational speed between the two turbines 2 and 3. Accordingly, the reduction drive 10 reduces the rotational speed of the output shaft 4 of the power turbine 2 so that the rotational speeds of the two turbines 2 and 3 match each other (i.e., are in synchronization with each other).

In the combined power generation unit 30, the steam turbine 3 starts rotating as steam generated from heat recovered from engine exhaust is supplied to the steam turbine 3 at an engine load of, for example, about 50%, and the internal temperature of the steam turbine 3 rises to about 300°C. After the engine load rises and the amount of exhaust increases, the power turbine 2 starts rotating as some engine exhaust is supplied to the power turbine 2, and the internal temperature of the power turbine 2 rises to about 400°C to about 500°C.

Detailed measurements of the amounts of thermal expansion of the power turbine 2 and the steam turbine 3 show that the steam turbine 3 experiences a larger amount of thermal expansion in the axial direction L, i.e., several millimeters or more. The power turbine 2 is found to experience a relatively small amount of thermal expansion in the axial direction L, i.e., 1/2 to 1/5 that of the steam turbine 3. Thus, it is important to absorb the thermal expansion of the output shaft 6 of the steam turbine 3.

The steam turbine 3 includes a thermal expansion starting point 11 located at one end in the axial direction L and fixed to the top surface of the foundation 1. The thermal expansion starting point 11 may be, for example, a bearing support on the side of the steam turbine 3 facing the clutch device 7.

The steam turbine 3 includes a thermal expansion moving point 15 located at the other end in the axial direction L and arranged to be movable relative to the top surface of the foundation 1 in the axial direction L. The thermal expansion moving point 15 may be, for example, a bearing support on the side of the steam turbine 3 facing away from the clutch device 7.

A relative movement structure A is provided so that no stress is transferred to the clutch device 7 when the thermal expansion of the steam turbine 3 moves the thermal expansion moving point 15 in the axial direction L. The relative movement structure A is configured such that, whereas the thermal expansion starting point 11 is directed toward the side of the steam turbine 3 facing the clutch device 7, the thermal expansion moving point 15 is directed toward the side of the steam turbine 3 facing away from the clutch device 7.

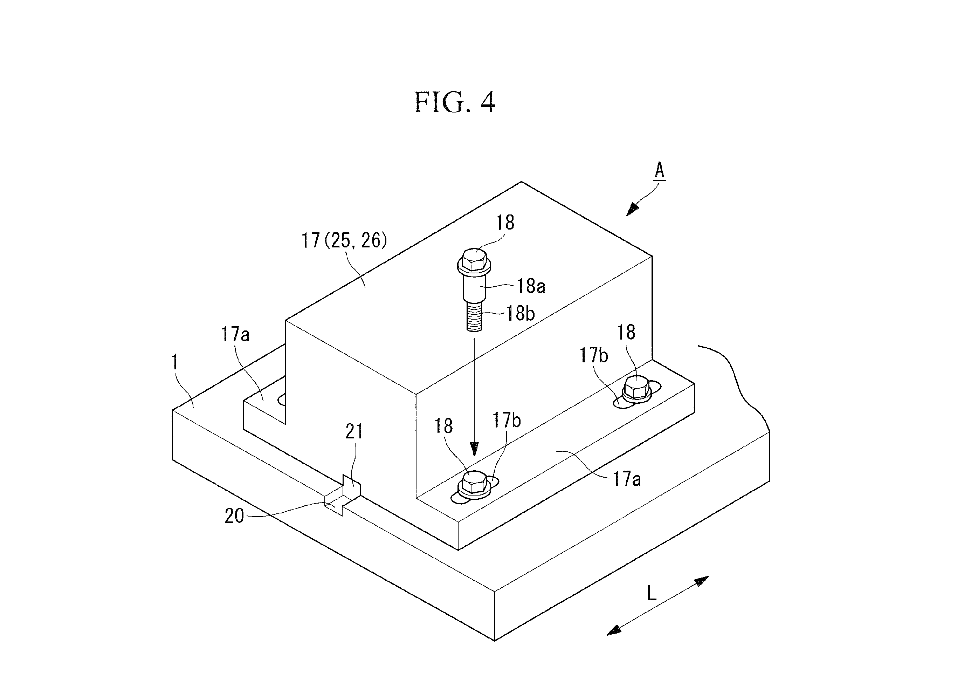

The thermal expansion moving point 15 is fixed to a moving base 17 via a support 16. The moving base 17 is mounted so as to be movable relative to the top surface of the foundation 1 in the axial direction L. As shown in Fig. 4, the moving base 17 is fastened to the top surface of the foundation 1 at two sides 17a thereof with a plurality of shoulder bolts 18 to prevent the moving base 17 from rising from the top surface of the foundation 1.

Each shoulder bolt 18 includes a shoulder 18a adjacent to the head thereof. The shoulder 18a has a larger diameter than a threaded portion 18b and a length slightly larger than the thickness of the two sides 17a. Thus, no fastening force is applied to the two sides 17a when the shoulder bolts 18 are fastened to the foundation 1.

The two sides 17a have bolt holes 17b elongated in the axial direction L and having an inner width sufficient for the shoulders 18a of the shoulder bolts 18 to pass through the bolt holes 17b. Thus, the moving base 17 is slidable across the top surface of the foundation 1 in the axial direction L by the distance over which the shoulders 18a of the bolts 18 are movable relative to the bolt holes 17b, which allows the thermal expansion moving point 15 to be moved in the axial direction L via the support 16. The shoulder bolts 18 may be replaced by bolts fitted with cylindrical spacers of the same length as the shoulders 18a.

The moving base 17 is guided so as to be movable in the axial direction L via a key groove 20 defined between the moving base 17 and the top surface of the foundation 1 and extending in the axial direction L and a key 21 fitted in the key groove 20. The key 21 may have a length close to the entire length of the moving base 17 in the axial direction L or may be divided into a plurality of segments.

As described above, the thus-configured combined power generation unit 30 includes the relative movement structure A, which is configured such that, whereas the thermal expansion starting point 11 of the steam turbine 3 is directed toward the clutch device 7 and is fixed to the top surface of the foundation 1, the thermal expansion moving point 15 of the steam turbine 3 is directed away from the clutch device 7 and is fixed to the moving base 17 mounted so as to be movable relative to the top surface of the foundation 1 only in the axial direction L.

Thus, when the steam turbine 3 expands thermally in the axial direction L, the thermal expansion starting point 11 of the steam turbine 3 does not move relative to the foundation 1; instead, the thermal expansion moving point 15 moves smoothly relative to the foundation 1 together with the moving base 17 in the axial direction L. In this case, the moving direction of the thermal expansion moving point 15 (the direction in which the axial size of the steam turbine 3 increases) is the direction away from the clutch device 7 (toward the generator 14), which prevents stress due to thermal expansion from being transferred to the clutch device 7.

Thus, unlike conventional combined power generation units, the combined power generation unit 30 requires no flexible coupling between the steam turbine 3 and the clutch device 7 to absorb the thermal expansion of the steam turbine 3 and hence requires fewer flexible couplings. The combined power generation unit 30 can therefore smoothly absorb the thermal expansion of the steam turbine 3 with a simple and inexpensive structure, can be made shorter in the axial direction L, thus achieving a smaller size, and can be constructed at a significantly lower cost.

In addition, because the combined power generation unit 30 requires no flexible coupling between the steam turbine 3 and the clutch device 7, the shaft length between the steam turbine 3 and the clutch device 7 can be made shorter, which results in a lower likelihood of misalignment and therefore a significantly higher alignment accuracy of the combined power generation unit 30.

In the first embodiment, the thermal expansion moving point 15 of the steam turbine 3 is fixed to the moving base 17, whereas the generator 14 is fixed to the top surface of the foundation 1, and the member, such as a coupling, capable of absorbing elongation and contraction in the axial direction L is provided in the shaft 13 coupling the steam turbine 3 and the generator 14; it may be modified, for example, by lengthening the moving base 17 toward the generator 14 and mounting the generator 14 on the moving base 17 to eliminate the elongation and contraction structure of the shaft 13.

### Second Embodiment

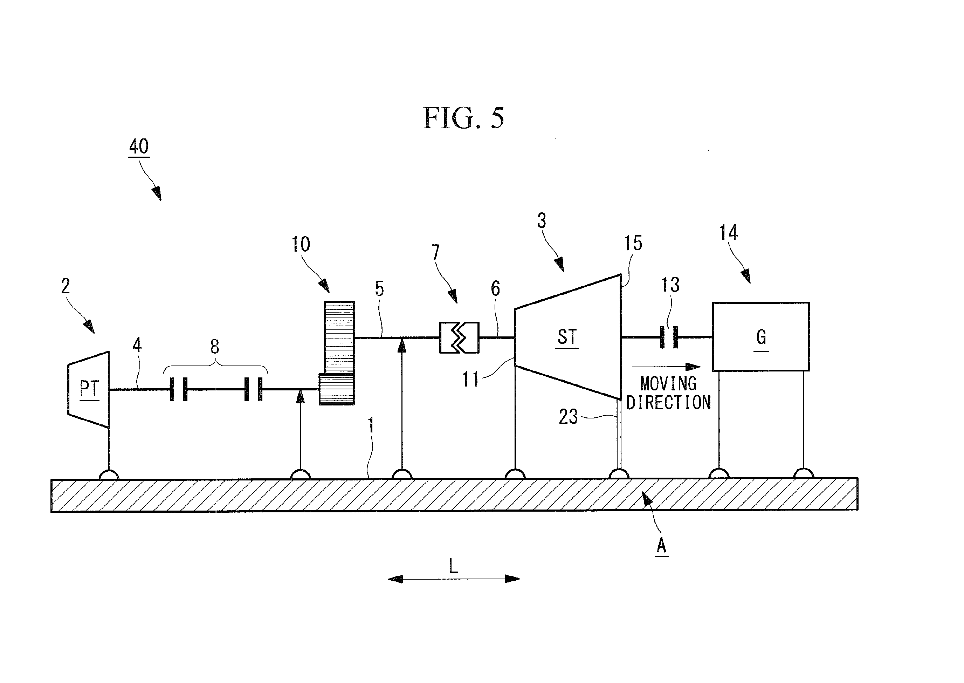

Fig. 5 is a side view of a combined power generation unit according to a second embodiment of the present invention. In a combined power generation unit 40, the same components as in the combined power generation unit 30 according to the first embodiment shown in Fig. 2 are indicated by the same reference signs, and a description thereof is omitted.

The combined power generation unit 40 according to the second embodiment includes a relative movement structure A similar to that of the first embodiment. Specifically, whereas the thermal expansion starting point 11 of the steam turbine 3 is directed toward the clutch device 7, the thermal expansion moving points 15 are directed away from the clutch device 7.

Whereas the thermal expansion moving point 15 of the steam turbine 3 in the first embodiment (see Fig. 2) is fixed to the moving base 17 via the support 16 and is movable over the top surface of the foundation 1 in the axial direction L, the thermal expansion moving points 15 of the steam turbine 3 in the combined power generation unit 40 according to the second embodiment are coupled to the top surface of the foundation 1 via flexible supports 23, and no moving base 17 is provided.

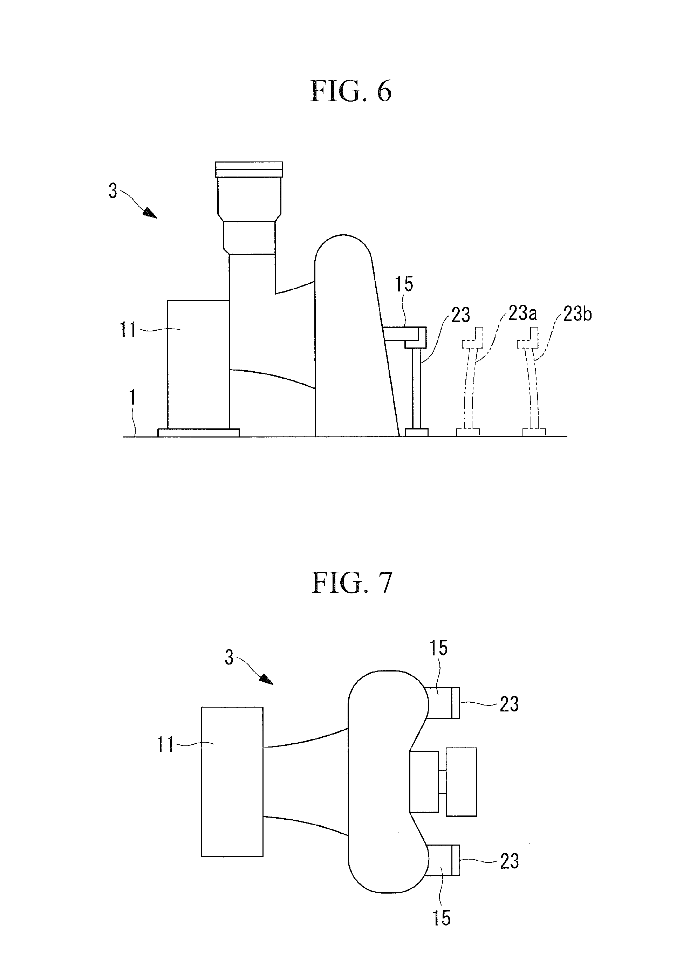

The flexible supports 23 deform only in the axial direction L while coupling the thermal expansion moving points 15 to the top surface of the foundation 1 to permit the movement of the thermal expansion moving points 15 in the axial direction L. Specifically, as shown in Figs. 6 and 7, the flexible supports 23 are plate-shaped members made of a material such as high-tension steel and extending in a plane perpendicular to the axial direction L, with the bottom ends thereof fixed to the top surface of the foundation 1 and the top ends thereof coupled near the thermal expansion moving points 15 of the steam turbine 3.

When the steam turbine 3 is not thermally expanded, the flexible supports 23 support the thermal expansion moving points 15 in a vertical position, as indicated by the solid line in Fig. 6. When the steam turbine 3 expands thermally, and accordingly the thermal expansion moving points 15 move away from the clutch device 7 in the axial direction L, the flexible supports 23 deform in the axial direction L to absorb the movement of the thermal expansion moving points 15, as indicated by reference sign 23a in Fig. 6.

Because the flexible supports 23 can be formed in an extremely simple form such as flexible plate-shaped members, the combined power generation unit 40 can be constructed at a still lower cost and has high reliability.

In addition, because the flexible supports 23 deform only in the axial direction L, no error occurs in the alignment of the axial direction L due to deformation of the flexible supports 23, which results in a higher alignment accuracy.

The flexible supports 23 may stay in a position deformed toward the steam turbine 3 when the steam turbine 3 is not thermally expanded, as indicated by reference sign 23b in Fig. 6, and may deform to a vertical position when the steam turbine 3 expands thermally and accordingly the thermal expansion moving points 15 move away from the clutch device 7 in the axial direction L.

### Third Embodiment

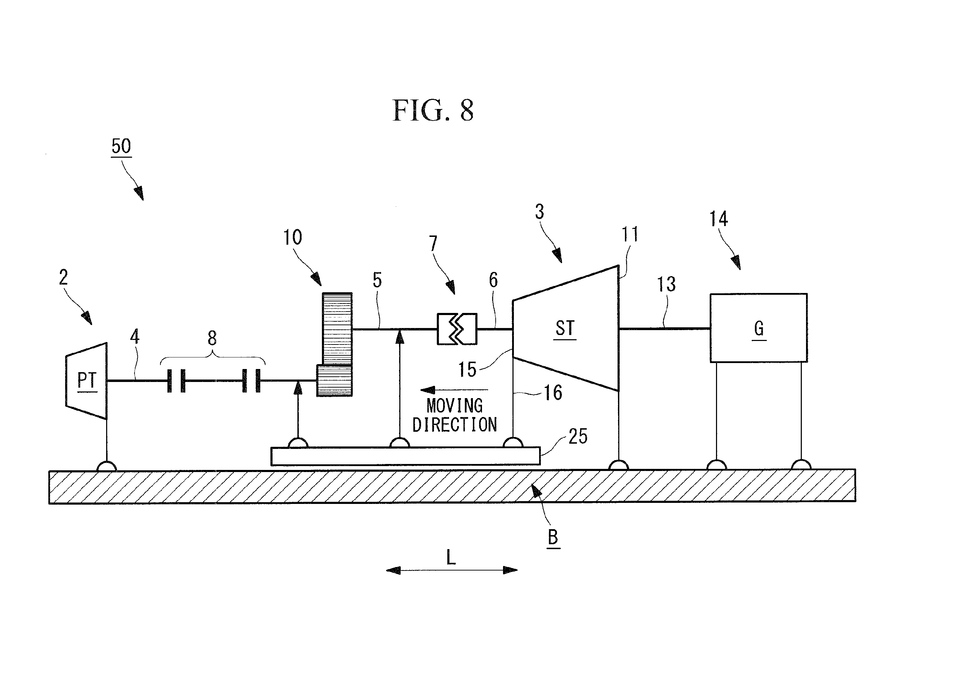

Fig. 8 is a side view of a combined power generation unit according to a third embodiment of the present invention. A combined power generation unit 50 includes a relative movement structure B that differs from those of the combined power generation units 30 and 40 according to the first and second embodiments.

The relative movement structure B is opposite to the relative movement structures A of the combined power generation units 30 and 40 according to the first and second embodiments in terms of the positional relationship between the thermal expansion starting point 11 and the thermal expansion moving point 15 of the steam turbine 3 in the axial direction L. Namely, the thermal expansion moving point 15 is directed toward the clutch device 7.

A moving base 25 is mounted on the top surface of the foundation 1 so as to be movable in the axial direction L. Whereas the moving base 25 is longer in the axial direction L than the moving base 17 in the first embodiment (see Fig. 2), the remaining components are similar to those in the first embodiment, including the shoulder bolts 18 for mounting on the top surface of the foundation 1 (see Fig. 4) and the key groove 20 and the key 21 for achieving movement relative to the foundation 1 in the axial direction L.

The thermal expansion moving point 15 of the steam turbine 3 is fixed to the moving base 25 via the support 16. The thermal expansion starting point 11 of the steam turbine 3 is fixed to the top surface of the foundation 1. The clutch device 7 and the reduction drive 10 are mounted on the moving base 25. These members 15, 7, and 10 are movable over the top surface of the foundation 1 together with the moving base 25 in the axial direction L. The power turbine 2 is fixed to the top surface of the foundation 1 rather than to the moving base 25.

When the steam turbine 3 expands thermally in the axial direction L in the thus-configured combined power generation unit 50, the thermal expansion starting point 11 of the steam turbine 3 does not move relative to the foundation 1; instead, the members such as the thermal expansion moving point 15, the clutch device 7, and the reduction drive 10 move away from the steam turbine 3 together with the moving base 25 in the axial direction L. This movement is absorbed by flexible couplings 8. This avoids relative movement between the thermal expansion moving point 15 and the clutch device 7 and thus prevents stress due to thermal expansion from being transferred to the clutch device 7.

Thus, the combined power generation unit 50 requires no flexible coupling between the steam turbine 3 and the clutch device 7 and hence requires fewer flexible couplings; therefore, it can be made shorter in the axial direction, thus achieving a smaller size and a higher alignment accuracy, and can also be constructed at a lower cost. In addition, because the thermal expansion of the steam turbine 3 is not transferred to the shaft 13 coupling the steam turbine 3 and the generator 14, the combined power generation unit 50 requires no elongatable/contractable coupling like that shown in Fig. 2.

### Fourth Embodiment

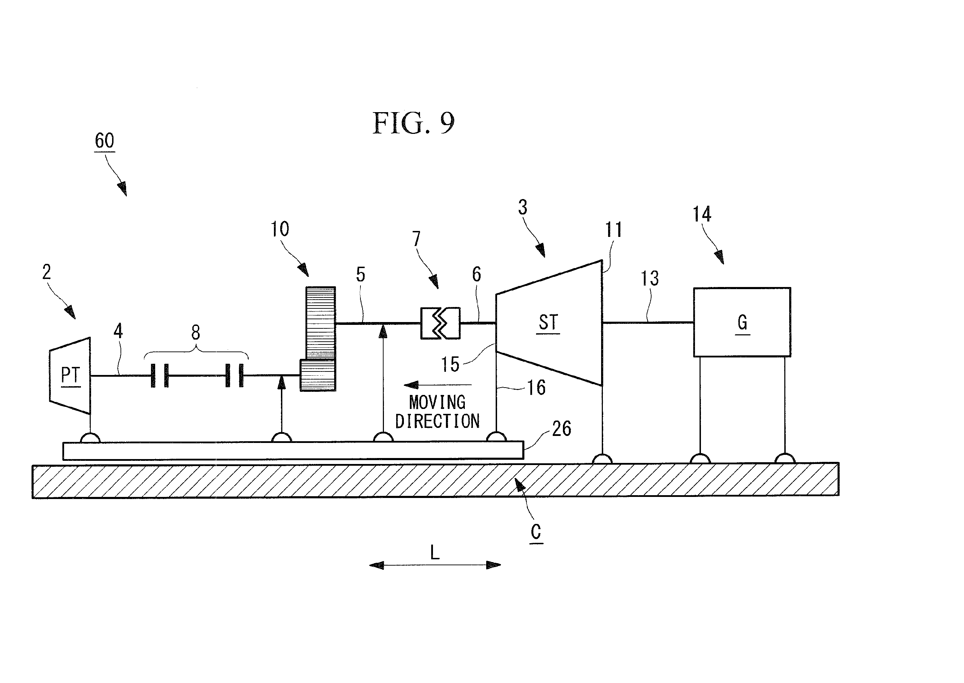

Fig. 9 is a side view of a combined power generation unit according to a fourth embodiment of the present invention. In a combined power generation unit 60, compared with the combined power generation unit 50 according to the third embodiment, a moving base 26 thereof is longer in the axial direction L than the moving base 25 in the third embodiment.

Whereas the members such as the thermal expansion moving point 15 of the steam turbine 3, the clutch device 7, and reduction drive 10 are mounted on the moving base 25 in the third embodiment, the power turbine 2 and the flexible couplings 8 are also mounted on the top surface of the moving base 26 in the fourth embodiment. The remaining components are similar to those in the third embodiment.

When the steam turbine 3 expands thermally in the combined power generation unit 60, the thermal expansion moving point 15, the clutch device 7, the reduction drive 10, the flexible couplings 8, and the power turbine 2 move together with the moving base 26 in the axial direction L. This prevents stress due to thermal expansion of the steam turbine 3 from being transferred to the clutch device 7 and the power turbine 2.

Thus, as in the third embodiment, the combined power generation unit 60 requires no flexible coupling between the steam turbine 3 and the clutch device 7; therefore, it can be made shorter axially than conventional combined power generation units, thus achieving a smaller size and a higher alignment accuracy, and can also be constructed at a lower cost.

In particular, because the thermal expansion moving point 15 of the steam turbine 3 and the power turbine 2 are fixed to the moving base 26 and do not move relative to each other, the flexible couplings 8 for absorbing the thermal expansion of the power turbine 2 are not affected by the thermal expansion of the steam turbine 3. Thus, the flexible couplings 8 absorb a smaller amount of thermal elongation than those of the combined power generation unit 50 according to the third embodiment, which allows the flexible couplings 8 to be of a simpler (less expensive) construction.

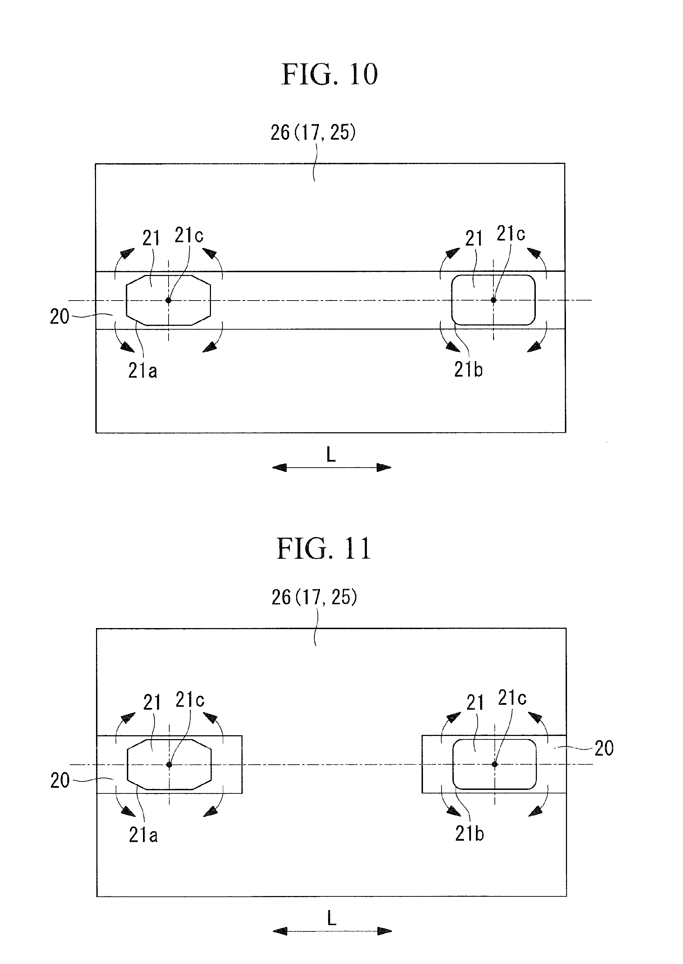

However, the equipment mounted on the moving base 26 is heavier and might prevent the moving base 26 from sliding smoothly across the foundation 1. To solve this problem, as shown in Fig. 10, a plurality of keys 21 are provided, each having a length significantly smaller than the size of the moving base 26 in the axial direction L and having a center of rotation 21c about which the key 21 is rotatable through an extremely small angle in the key groove 20, the keys 21 being separated from each other in the axial direction L.

More specifically, each key 21 has a chamfer 21a or a round chamfer 21b at each corner in plan view and is slightly rotatable about the center of rotation 21c in the key groove 20. The plurality of keys 21 are arranged in the key groove 20 so as to be separated from each other in the axial direction L. A highly viscous liquid, such as grease, is preferably sealed between the key groove 20 and the keys 21. The key groove 20 may be formed over the entire length of the moving base 26; alternatively, as shown in Fig. 11, short key grooves 20 in which the keys 21 can be fitted may be formed so as to be distributed in the axial direction L.

The moving base 26 mounted on the foundation 1 with the keys 21 therebetween can slide smoothly across the foundation 1 even if the moving base 26 is heavy. In addition, when the members such as the moving base 26, the key groove 20, and the keys 21 expand thermally and deform slightly due to heat from the steam turbine 3, the keys 21 rotate through an extremely small angle in the key groove 20 to absorb the thermal deformation. Thus, a simple structure can be used to achieve a higher alignment accuracy of the combined-cycle power generation unit 60.

The centers of rotation 21c about which the keys 21 are rotatable through an extremely small angle in the key groove 20, as described above, can also be used in the combined power generation units 30, 40, and 50 according to the first to third embodiments.

### Fifth Embodiment

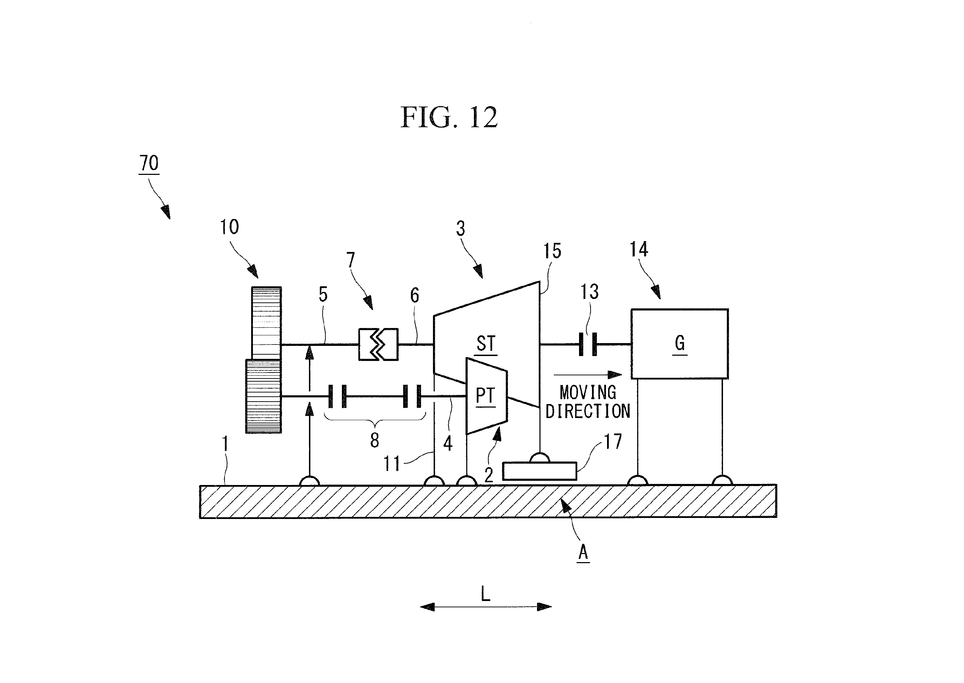

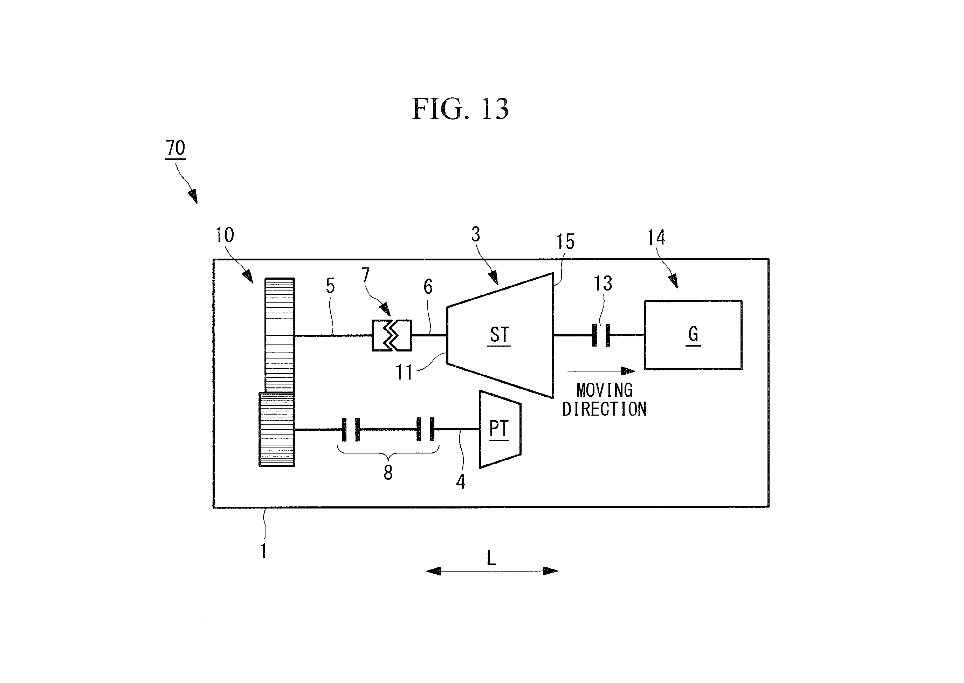

Figs. 12 and 13 are a side view and a plan view, respectively, of a combined power generation unit according to a fifth embodiment of the present invention. A combined power generation unit 70 is a modification of the combined power generation unit 30 according to the first embodiment shown in Fig. 2. Specifically, whereas the power turbine 2 and the steam turbine 3 are arranged in series in the combined power generation unit 30 according to the first embodiment, the power turbine 2 and the steam turbine 3 are arranged in parallel in the combined power generation unit 70. The remaining components are identical to those of the combined power generation unit 30 according to the first embodiment and are indicated by the same reference signs, and a description thereof is omitted.

In the thus-configured combined power generation unit 70, as in the combined power generation unit 30 according to the first embodiment, the movement of the moving base 17 absorbs thermal elongation in the axial direction L due to thermal expansion of the steam turbine 3; thus, it requires no flexible coupling between the steam turbine 3 and the clutch device 7, and therefore, the shaft length between the steam turbine 3 and the clutch device 7 can be made shorter. This, in combination with the parallel arrangement of the power turbine 2 and the steam turbine 3, results in a significantly smaller size of the combined power generation unit 70 in the axial direction L and a higher alignment accuracy.

As described above, a combined power unit according to the present invention requires fewer flexible couplings to prevent stress due to thermal expansion of a turbine from being transferred to a clutch device, thus achieving a smaller size, mainly in the axial direction, a lower construction cost, and a higher alignment accuracy.

In addition, because the combined power unit according to the present invention can be made shorter in the axial direction, it occupies a smaller inboard space when mounted on a vessel. This simplifies the inboard layout, thus improving the design flexibility of each part.

Furthermore, because the combined power unit according to the present invention requires fewer flexible couplings, which are expensive, the vessel can be constructed at a lower cost. The combined power unit can also be made shorter in the axial direction, thus achieving a higher alignment accuracy, which results in improved occupant comfort and quietness, with reduced rotational vibration.

The present invention is not limited to the configurations of the first to fifth embodiments described above; various modifications and improvements can be made without departing from the scope of the present invention, and embodiments with such modifications and improvements are also encompassed in the scope of the present invention.

For example, although the foregoing embodiments illustrate the application of the present invention to the steam turbine 3, which experiences a larger amount of thermal expansion than the power turbine 2, the present invention can also be applied to the power turbine 2.

### {Reference Signs List}

- 1: foundation
- 2: power turbine
- 3: steam turbine
- 4, 5, 6: output shaft
- 7: clutch device
- 8, 9: flexible coupling
- 11: thermal expansion starting point
- 14: generator
- 15: thermal expansion moving point
- 17, 25, 26: moving base
- 20: key groove
- 21: key
- 21a: chamfer
- 21b: round chamfer
- 21c: center of rotation
- 23: flexible support
- 30, 40, 50, 60, 70: combined power generation unit (combined power unit)
- A,: B relative movement structure
- L: axial direction of turbine

## Claims

1. A combined power unit in which an output shaft of a power turbine and an output shaft of a steam turbine that are mounted on a top surface of a foundation can be coupled via a clutch device, wherein
at least one of the power turbine and the steam turbine, whichever experiences a larger amount of thermal expansion, comprises a thermal expansion starting point located at one end in an axial direction and fixed to the top surface of the foundation and a thermal expansion moving point located at another end in the axial direction and arranged to be movable relative to the top surface of the foundation in the axial direction, and
a relative movement structure that prevents stress due to movement of the thermal expansion moving point from being transferred to the clutch device is provided.

2. The combined power unit according to Claim 1, wherein the thermal expansion moving point is fixed to a moving base mounted so as to be movable relative to the top surface of the foundation in the axial direction.

3. The combined power unit according to Claim 2, wherein the moving base is movable in the axial direction via a key groove defined between the moving base and the top surface of the foundation and extending in the axial direction and a plurality of keys fitted in the key groove, each key having an axial length that is smaller than an axial size of the moving base and having a center of rotation about which the key is rotatable through an extremely small angle in the key groove, the keys being separated from each other in the axial direction.

4. The combined power unit according to Claim 1, wherein the relative movement structure is configured such that the thermal expansion moving point and the clutch device are mounted on a moving base mounted so as to be movable relative to the top surface of the foundation in the axial direction.

5. The combined power unit according to Claim 1, wherein the thermal expansion moving point in the relative movement structure is coupled to the top surface of the foundation via a flexible support configured to deform in the axial direction while coupling the thermal expansion moving point to the top surface of the foundation to permit movement of the thermal expansion moving point in the axial direction.

6. A vessel comprising the combined power unit according to any one of Claims 1 to 5.
